# EUROPEAN PATENT APPLICATION

(11) **EP 3 032 044 A1**
(43) Date of publication of application: **15.06.2016**
(21) Application number: 15195894.9
(22) Date of filing: 23.11.2015
(51) Int. Cl.: F01D 25/00, F02C 7/143

(54) **SYSTEMS AND METHODS FOR INJECTING FLUIDS AT ONE OR MORE STAGES OF A MULTISTAGE COMPONENT**

(30) Priority: 12.12.2014 US 201414568646
(71) Applicant: General Electric Company, Schenectady, NY 12345 (US)
(72) Inventor: RAMIREZ MUNOZ, Javier, 76230 Grand Juriquilla (MX); CARDENAS PEREZ, Alfonso, 76903 Corregidora (MX); MONTIEL LOPEZ, Pedro, 76146 Col. Residencial El Refugio (MX); VAZQUEZ CARMONA, Cesar Octavio, Fraccionamiento Sonterra (MX)
(74) Representative: Lee, Brenda

(57) **Abstract**

A system for injecting one or more fluids at one or more stages 202 of a multi-stage component 200 of a gas turbine engine is disclosed herein. The system includes a fluid source 302 having a fluid. The system also includes at least one spray nozzle 306disposed about each stage of the multi-stage component. The at least one spray nozzle is in fluid communication with the fluid source.

## Description

### FIELD

Embodiments of the present disclosure relate generally to gas turbine engines and more particularly relate to systems and methods for injecting one or more fluids at one or more stages of a multi-stage component of a gas turbine engine.

### BACKGROUND

Current attempts to clean a multi-stage component of a gas turbine engine, such as an axial compressor, may include flowing water through the axial compressor via the axial compressor inlet. Similar techniques are used to clean a turbine. These techniques, however, may be inefficient and may not result in adequate cleaning. For example, current techniques may not effectively clean all of the stages of the multi-stage component. Accordingly, there is a need for a system capable of cleaning the various stages of a multi-stage component of a gas turbine engine.

### BRIEF DESCRIPTION

Some or all of the above needs and/or problems may be addressed by certain embodiments of the present disclosure. According to an embodiment, there is disclosed a system for injecting one or more fluids at one or more stages of a multi-stage component of a gas turbine engine. The system includes a fluid source with a fluid therein. The system also includes at least one spray nozzle disposed about each stage of the multi-stage component. The at least one spray nozzle is in fluid communication with the fluid source.

In another embodiment, a method for injecting one or more fluids at one or more stages of a multi-stage component of a gas turbine engine is disclosed. The method includes positioning at least one spray nozzle about each stage of the multi-stage component, connecting the at least one spray nozzle to a fluid source, and spraying one or more of the stages of the multi-stage component with a fluid from the fluid source.

According to another embodiment, there is disclosed a system for injecting one or more fluids into a gas turbine engine. The system includes a multi-stage component of the gas turbine engine. The system also includes a fluid source having a fluid. Moreover, the system includes at least one spray nozzle disposed at each stage of the multi-stage component or at least at two different stages. The at least one spray nozzle is in fluid communication with the fluid source.

Other embodiments, aspects, and features of the disclosure will become apparent to those skilled in the art from the following detailed description, the accompanying drawings, and the appended claims.

### BRIEF DESCRIPTION OF THE DRAWINGS

Reference will now be made to the accompanying drawings, which are not necessarily drawn to scale.
FIG. 1 schematically depicts an example gas turbine engine according to an embodiment.
FIG. 2 schematically depicts a partial cross-sectional view of a multi-stage component of a gas turbine engine according to an embodiment.
FIG. 3 schematically depicts a partial cross-sectional view of a system for injecting one or more fluids at one or more stages of a multi-stage component of a gas turbine engine according to an embodiment.
FIGS. 4(a)-4(c) schematically depicts an example spray nozzle according to an embodiment.

### DETAILED DESCRIPTION

Illustrative embodiments will now be described more fully hereinafter with reference to the accompanying drawings, in which some, but not all embodiments are shown. The present disclosure may be embodied in many different forms and should not be construed as limited to the embodiments set forth herein. Like numbers refer to like elements throughout.

Illustrative embodiments are directed to, among other things, systems and methods for injecting one or more fluids at one or more stages of a multi-stage component of a gas turbine engine. In some instances, the multi-stage component of the gas turbine engine may be an axial compressor. In other instances, the multi-stage component of the gas turbine engine may be a turbine.

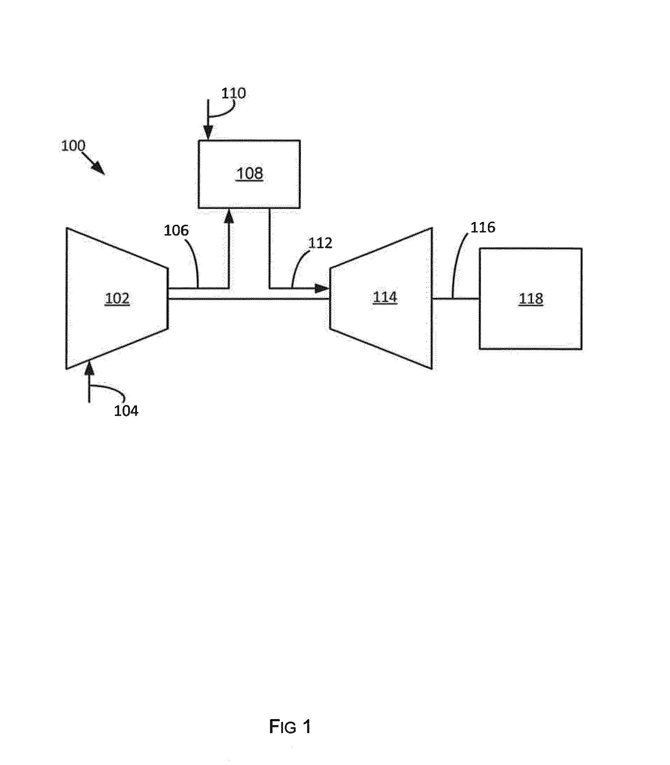

FIG. 1 depicts an example schematic view of a gas turbine engine 100 as may be used herein. The gas turbine engine 100 may include a compressor 102. The compressor 102 may compress an incoming flow of air 104. The compressor 102 may deliver the compressed flow of air 106 to a combustor 108. The combustor 108 may mix the compressed flow of air 106 with a pressurized flow of fuel 110 and ignite the mixture to create a flow of combustion gases 112. Although only a single combustor 108 is shown, the gas turbine engine 100 may include any number of combustors 108. The flow of combustion gases 112 may be delivered to a turbine 114. The flow of combustion gases 112 may drive the turbine 114 so as to produce mechanical work. The mechanical work produced in the turbine 114 may drive the compressor 102 via a shaft 116 and an external load 118, such as an electrical generator or the like.

The gas turbine engine 100 may use natural gas, various types of syngas, and/or other types of fuels. The gas turbine engine 100 may be any one of a number of different gas turbine engines offered by General Electric Company of Schenectady, New York, including, but not limited to, those such as a 7 or a 9 series heavy duty gas turbine engine and the like. The gas turbine engine 100 may have different configurations and may use other types of components. The gas turbine engine may be an aeroderivative gas turbine, an industrial gas turbine, or a reciprocating engine. Other types of gas turbine engines also may be used herein. Multiple gas turbine engines, other types of turbines, and other types of power generation equipment also may be used herein together.

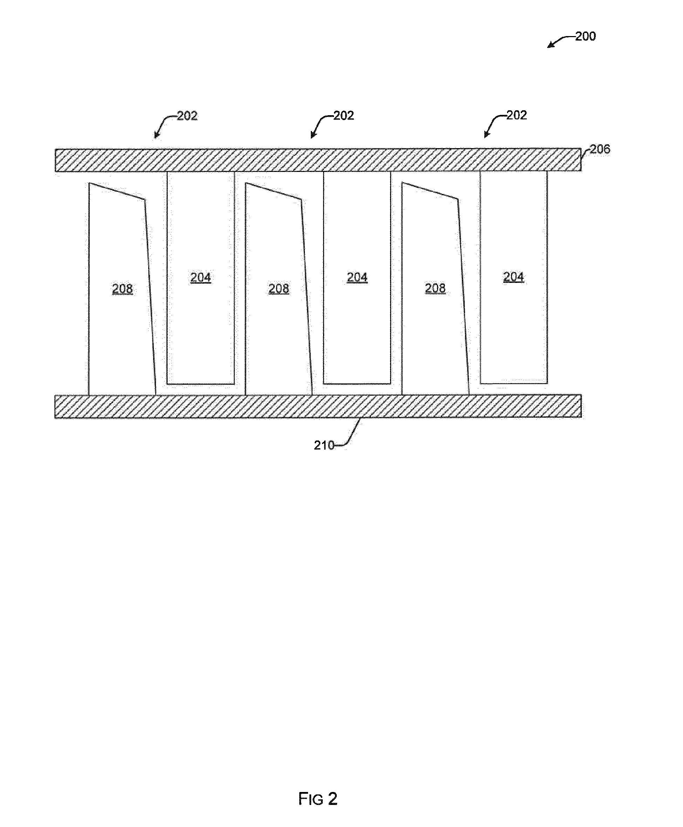

FIG. 2 depicts a multi-stage component 200 of a gas turbine engine. In some instances, the multi-stage component 200 may be an axial compressor (such as the compressor 102 in the gas turbine engine 100). In other instances, the multi-stage component 200 may be a turbine (such as the turbine 114 in the gas turbine engine 100). In any case, the multi-stage component 200 may include a number of stages 202. Each stage 202 of the multi-stage component 200 may include a number of circumferentially spaced stators 204 coupled to a casing 206. In addition, each stage 202 of the multi-stage component 200 may include a number of circumferentially spaced rotors 208 coupled to a rotor disk 210. The stators 204 and rotors 208 of each stage may be positioned adjacent to one another. In this manner, each pair of rotors 208 and stators 204 forms a stage 202. In the instance of an axial compressor, the rotors 208 accelerate the incoming flow of air 104, and the stators 204 redirect the flow direction of the incoming flow of air 104, preparing it for the rotor 208 of the next stage 202. In the instance of a turbine, the flow of combustion gases 112 acts on the rotors 208 so that they move and impart rotational energy to the rotor disk 210, and the stators 204 redirect the flow direction of the flow of combustion gases 112, preparing it for the rotor 208 of the next stage 202.

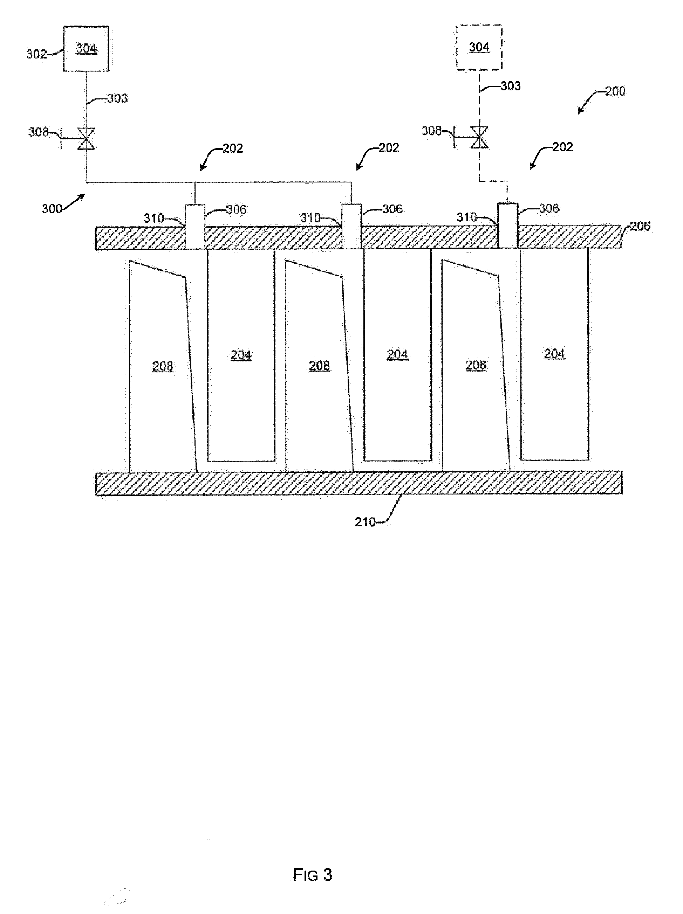

FIG. 3 further depicts a system 300 for injecting one or more fluids at one or more stages 202 of the multi-stage component 200. As noted above, the multi-stage component 200 may be an axial compressor or a turbine. The system 300 may include one or more fluid sources 302. The fluid sources 302 may include one or more fluids 304 therein. In some instances, the fluids 304 may be the same or different fluids in the fluid sources 302. That is, different fluid sources 302 may include the same or different fluids 304 therein. In some instances, the fluids 304 are water, detergents, coatings, dyes, penetrants, cleaning solutions, or a combination thereof. The system 300 also includes at least one spray nozzle 306 disposed about each stage 202 of the multi-stage component 200. The spray nozzle 306 may be in fluid communication with one or more of the fluid sources 302 by way of one or more conduits 303, manifolds, or combinations thereof. In some instances, a number of spray nozzles 306 may be disposed about each stage 202 of the multi-stage component 200. One or more of the spray nozzles 306 may be in fluid communication with the same fluid source 302, or each of the spray nozzles 306 may be in communication with a separate fluid source 302, or a combination thereof.

The location and number of spray nozzles 306 about each stage 202 may vary. For example, the spray nozzles 306 may be arranged circumferentially about each stage 202 of the multi-stage component 200. In some instances, the spray nozzles 306 may be equally spaced apart from one another at each stage 202. In other instances, the distance between the spray nozzles 306 may vary at each stage 202. Some stages 202 may include more or less spray nozzles 306 than others. The spray nozzles 306 may be aligned axially with spray nozzles 306 from adjacent stages 202, or the spray nozzles 306 of adjacent stages 202 may be axially offset. Some stages 202 may include a single spray nozzle 306, while other stages 202 may include more. In addition, the spray nozzles 306 may be omitted in some stages 202.

The spray nozzles 306 may be disposed at an upstream portion of each stage 202, at a downstream portion of each stage 202, between the rotors 208 and the stators 204 of each stage 202, or a combination thereof. In this manner, each stage 202 may include one or more spray nozzles 306 disposed thereabout. The spray nozzles 306 may be in fluid communication with the fluid source 302 by way of the conduit 303 such that each stage 202 may include one or more spray nozzles 306 that are capable of providing a spray about the particular stage 202. That is, the spray nozzles 306 may spray the rotors 208, the stators 204, the interior casing 206, the rotor disk 210, and/or other components of the multi-stage component 200. In this manner, the system 300 enables injection of one or more fluids into the various stages 202 of the multi-stage component 200.

As noted above, the spray nozzles 306 may inject one or more fluids into the various stages 202 of the multi-stage component 200. In some instances, the fluid 304 is water, a detergent, a coating, a dye, a penetrant, a cleaning solution, or a combination thereof. In some instances, the spray nozzles 306 may be utilized to clean the multi-stage component 200. In other instances, the spray nozzles 306 may be utilized to provide a protective coating to the internal components of the multi-stage component 200. The spray nozzles 306 may spray at a low pressure, a medium pressure, or a high pressure. The pressure provided by the spray nozzles 306 may vary. For example, one or more of the spray nozzles 306 located at a particular stage 202 may spray at the same pressure or at different pressures. Similarly, the pressure of the spray at different stages 202 may vary. For example, the spray nozzles 306 at a first stage of the multi-stage component 200 may spray at a higher pressure than the spray nozzles 306 at a second stage of the multi-stage component 200, or vice versa. Any suitable combination of pressures may be used. Likewise, the spray pattern of each spray nozzle 306 or combination of spray nozzles 306 may vary. For example, the spray pattern of a particular spray nozzle 306 or a combination of spray nozzles 306 may vary by stage 202.

In some instances, the pressure of the spray nozzles 306 may be controlled by a pressure regulator 308. The pressure regulator 308 may be in fluid communication with and disposed between the fluid source 302 and the spray nozzles 306. In some instances, the system 300 may include a number of pressure regulators 308 such that each spray nozzle 306 may be associated with a particular pressure regulator 308. In other instances, a number of spray nozzles 306 may be associated with a single pressure regulator 308 by way of a manifold or the like. In certain embodiments, the pressure regulator 308 may be omitted. In such instances, the spray nozzles 306 themselves may be configured to provide a spray at a specific pressure.

In certain embodiments, the spray nozzles 306 may be operated independently of one another. For example, each of the spray nozzles 306 may be in communication with a separate fluid source 302 and a separate pressure regulator 308. In other instances, the spray nozzles 306 may be operated as a group.

The spray nozzles 306 may be removably attached to the casing 206 of the multi-stage component 200. For example, the casing 206 of the multi-stage component 200 may include at least one bore 310 about each stage 202 at any of the locations discussed above. In some instances, the casing 206 may include a number of bores 310 disposed at various locations about each stage 202. The location and number of bores 310 may vary by stage 202. For example, the bores 310 may be arranged in any manner similar to the arrangement of the spray nozzles 306 discussed above. The bores 310 may be configured to at least partially receive the spray nozzles 306 therein. The bores 310 provide a passageway from an exterior of the casing 206 to an interior of the casing 206. In this manner, a nozzle end (or spray end) of the spray nozzles 306 may be positioned through the bore 310 so as to provide a spray about the particular stage 202. In some instances, the spray nozzles 306 may be removed from the bores 310, and the bores 310 may be used for other purposes, such as inspection ports or the like. In this manner, a borescope or the like may be inserted into each bore 310 to inspect the interior of the multi-stage component 200.

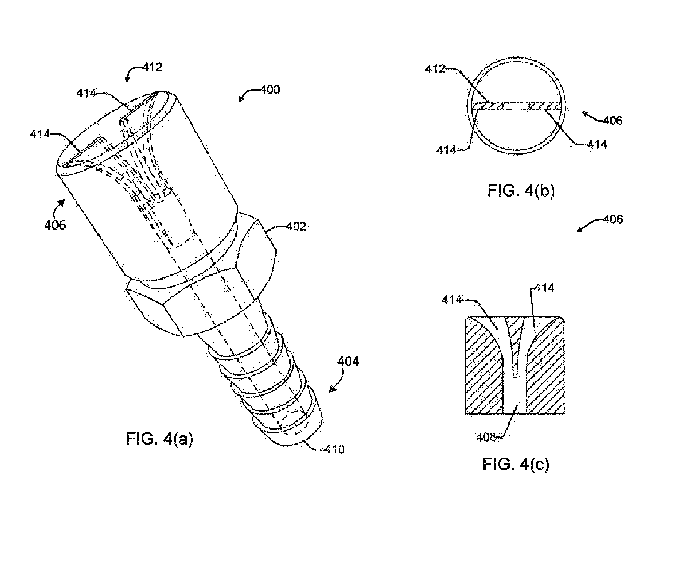

FIG. 4 depicts an example spray nozzle 400 that may be used herein. The spray nozzle 400 may include a main body 402 having a first end 404 and a second end 406. The second end 406 may be at least partially positioned within the bore 310. A passageway 408 within the main body 402 extends from the first end 404 to the second end 406. The passageway 408 includes an inlet 410 about the first end 404 and an outlet 412 about the second end 406. The inlet 410 may be attached to a hose (or any other fluid conduit, such as conduit 303) that is in fluid communication with the fluid source 302. The outlet 412 is configured to provide a spray within the interior of the multi-stage component 200. In some instances, the outlet 412 branches into two outlet orifices 414. The outlet orifices 414 provide a first stream spray and a second stream spray. The first stream spray and the second stream spray may be at an angle relative to each other. Other types of spray nozzles may be used herein. Moreover, various combinations of spray nozzles may be used herein.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments.

Various aspects and embodiments of the present invention are defined by the following numbered clauses:
1. A system for injecting one or more fluids at multiple stages of a multi-stage component of a gas turbine engine, the system comprising:
   at least one fluid source comprising common or different fluids; and
   at least one spray nozzle disposed about two or more stages of the multi-stage component, wherein the at least one spray nozzle is in fluid communication with the fluid source and is configured to inject the fluids at the two or more stages of the multi-stage component.
2. The system of clause 1, further comprising a pressure regulator in fluid communication with and disposed between the fluid source and the at least one spray nozzle.
3. The system of any preceding clause, wherein the multi-stage component comprises an axial compressor or a turbine.
4. The system of any preceding clause, wherein each stage of the multi-stage component comprises:
   a plurality of circumferentially spaced stators coupled to a casing; and
   a plurality of circumferentially spaced rotors coupled to a rotor disk.
5. The system of any preceding clause, wherein the casing comprises at least one bore about each stage of the multi-stage component, wherein the at least one bore is configured to at least partially receive the at least one spray nozzle.
6. The system of any preceding clause, wherein the at least one spray nozzle is removably attached to the casing and/or the at least one bore.
7. The system of any preceding clause, wherein the fluid comprises at least one of: water, a detergent, a coating, a dye, a penetrant, a cleaning solution, or a combination thereof.
8. The system of any preceding clause, wherein the at least one spray nozzle and the at least one bore comprises a plurality of spray nozzles and a plurality of bores arranged circumferentially about each stage of the multi-stage component.
9. The system of any preceding clause, wherein the at least one spray nozzle at each stage comprises a specific spray pattern for that stage.
10. The system of any preceding clause, wherein the at least one spray nozzle comprises a two stream spray.
11. The system of any preceding clause, wherein the at least one spray nozzle comprises:
   a main body comprising a first end and a second end;
   a passageway within the main body extending from the first end to the second end, wherein the passageway comprises an inlet and an outlet, wherein the outlet branches into two outlet orifices for providing a first stream spray and a second stream spray.
12. The system of any preceding clause, wherein the first stream spray and the second stream spray are at an angle relative to each other.
13. A method for spraying one or more fluids at multiple stages of a multi-stage component of a gas turbine engine, the method comprising:
   positioning at least one spray nozzle about two or more stages of the multi-stage component;
   connecting the at least one spray nozzle to a fluid source; and
   spraying the two or more stages of the multi-stage component with a fluid from the fluid source.
14. The method of any preceding clause, further comprising varying the pressure of the spray at each stage of the multi-stage component.
15. The method of any preceding clause, further comprising varying the spray pattern at each stage of the multi-stage component.
16. A system for injecting one or more fluids into a gas turbine engine, the system comprising:
   a multi-stage component of the gas turbine engine;
   a fluid source comprising a fluid; and
   at least one spray nozzle disposed about each stage of the multi-stage component, wherein the at least one spray nozzle is in fluid communication with the fluid source and is configured to inject the fluid at each stage of the multi-stage component.
17. The system of any preceding clause, wherein the multi-stage component comprises an axial compressor or a turbine.
18. The system of any preceding clause, wherein each stage of the multi-stage component comprises:
   a plurality of circumferentially spaced stators coupled to a casing; and
   a plurality of circumferentially spaced rotors coupled to a rotor disk.
19. The system of any preceding clause, wherein the casing comprises at least one bore about each stage of the multi-stage component, wherein the at least one bore is configured to at least partially receive the at least one spray nozzle.
20. The system of any preceding clause, wherein the at least one spray nozzle is removably attached to the casing and/or the at least one bore.

## Claims

1. A system for injecting one or more fluids at multiple stages of a multi-stage component of a gas turbine engine, the system comprising:
at least one fluid source comprising common or different fluids; and
at least one spray nozzle disposed about two or more stages of the multi-stage component, wherein the at least one spray nozzle is in fluid communication with the fluid source and is configured to inject the fluids at the two or more stages of the multi-stage component.

2. The system of claim 1, further comprising a pressure regulator in fluid communication with and disposed between the fluid source and the at least one spray nozzle.

3. The system of claim 1 or 2, wherein the multi-stage component comprises an axial compressor or a turbine.

4. The system of claim 1, 2 or 3, wherein each stage of the multi-stage component comprises:
a plurality of circumferentially spaced stators coupled to a casing; and
a plurality of circumferentially spaced rotors coupled to a rotor disk.

5. The system of any preceding claim, wherein the fluid comprises at least one of: water, a detergent, a coating, a dye, a penetrant, a cleaning solution, or a combination thereof.

6. The system of any preceding claim, wherein the at least one spray nozzle at each stage comprises a specific spray pattern for that stage.

7. The system of any preceding claim, wherein the at least one spray nozzle comprises a two stream spray.

8. The system of claim 7, wherein the at least one spray nozzle comprises:
a main body comprising a first end and a second end;
a passageway within the main body extending from the first end to the second end, wherein the passageway comprises an inlet and an outlet, wherein the outlet branches into two outlet orifices for providing a first stream spray and a second stream spray.

9. The system of claim 8, wherein the first stream spray and the second stream spray are at an angle relative to each other.

10. A method for spraying one or more fluids at multiple stages of a multi-stage component of a gas turbine engine, the method comprising:
positioning at least one spray nozzle about two or more stages of the multi-stage component;
connecting the at least one spray nozzle to a fluid source; and
spraying the two or more stages of the multi-stage component with a fluid from the fluid source.

11. The method of claim 10, further comprising varying the pressure of the spray at each stage of the multi-stage component.

12. The method of claim 10 or 11, further comprising varying the spray pattern at each stage of the multi-stage component.

13. A system for injecting one or more fluids into a gas turbine engine, the system comprising:
a multi-stage component of the gas turbine engine;
a fluid source comprising a fluid; and
at least one spray nozzle disposed about each stage of the multi-stage component, wherein the at least one spray nozzle is in fluid communication with the fluid source and is configured to inject the fluid at each stage of the multi-stage component.

14. The system of claim 13, wherein the multi-stage component comprises an axial compressor or a turbine.

15. The system of claim 13 or 14, wherein each stage of the multi-stage component comprises:
a plurality of circumferentially spaced stators coupled to a casing; and
a plurality of circumferentially spaced rotors coupled to a rotor disk.
